# DEMANDE DE BREVET EUROPEEN

(11) **EP 1 535 795 A1**
(43) Date de publication de la demande: **01.06.2005**
(21) Numéro de dépôt: 04292669.1
(22) Date de dépôt: 10.11.2004
(51) Int. Cl.: B60N 2/48

(54) **Procédé de réalisation d'un appui-tête par moulage in situ**

(30) Priorité: 21.11.2003 FR 0350871
(71) Demandeur: Centre d'Etude et de Recherche pour l'Automobile ( CERA), 51100 Reims (FR)
(72) Inventeur: Le Gall, Francois, 02130 Coulognes (FR)
(74) Mandataire: Geismar, Thierry

(57) **Abrégé**

L'invention concerne un procédé de réalisation d'un appui-tête, notamment pour siège de véhicule automobile, ledit appui-tête comprenant une armature de montage (4), un coussin formé, dans une première partie (6) destinée à venir en vis-à-vis de la tête d'un utilisateur, d'une mousse relativement souple, et dans une deuxième partie (7) située à l'opposé de ladite première partie, d'une mousse relativement rigide, et une enveloppe (8) pour ledit coussin, caractérisé par le fait qu'il comprend les étapes consistant à :
- réaliser ladite première partie ;
- placer dans un moule (11) ladite première partie avec ladite armature et ladite enveloppe ; et
- injecter dans le moule la mousse correspondant à ladite deuxième partie de manière à surmouler la deuxième partie sur la première partie et l'armature à l'intérieur de l'enveloppe.

## Description

La présente invention concerne un procédé de réalisation d'un appui-tête, notamment pour siège de véhicule automobile, par moulage in situ, et plus particulièrement d'un tel appui-tête comprenant une armature de montage, un coussin formé, dans une première partie destinée à venir en vis-à-vis de la tête d'un utilisateur, d'une mousse relativement souple, et dans une deuxième partie située à l'opposé de ladite première partie, d'une mousse relativement rigide, et une enveloppe pour ledit coussin.

Les appuis-tête installés sur les dossiers de sièges d'automobile ont deux fonctions principales.

La première fonction est d'éviter à l'occupant du siège des lésions cervicales lorsque le véhicule est percuté par l'arrière, en évitant que sa tête parte trop en arrière.

L'autre fonction est de permettre au passager de reposer sa tête confortablement sur le coussin de l'appui-tête.
Les plus simples de ces appuis-tête comportent comme armature un étrier métallique en U autour duquel est surmoulé un volume de mousse formant coussin, recouvert par une enveloppe généralement obtenue par couture de flans textiles ou autres. Seules les extrémités des branches du U sortent du coussin pour s'engager dans des guides solidaires de l'armature du dossier du siège.

Ces appuis-tête sont fréquemment réalisés en utilisant la technique du moulage in situ. L'enveloppe est cousue puis retournée par une bouche ménagée à cet effet. L'étrier est ensuite introduit dans l'enveloppe, par exemple en laissant sortir les branches par deux trous prévus à cet effet. L'ensemble est ensuite positionné dans un moule où on procède à la coulée de la mousse à l'intérieur de l'enveloppe par l'intermédiaire de la bouche ou d'un trou de coulée indépendant. La poussée exercée à l'intérieur de l'enveloppe referme alors la bouche.

On obtient ainsi un appui-tête dont la mousse est solidaire de l'étrier et de l'envers de la coiffe, assurant une bonne cohésion de l'ensemble.

D'autres armatures sont également possibles, par exemple sous forme d'un boîtier agencé pour permettre le réglage de l'appui-tête en hauteur et/ou en inclinaison.

Il est difficile de trouver un compromis en ce qui concerne l'épaisseur et la souplesse de la mousse entre la tête et l'étrier, pour procurer un confort qui demande de la souplesse et assurer une sécurité qui demande de la raideur.

Il est à noter que la couche de mousse souple usuellement disposée en envers du revêtement constituant l'enveloppe, afin de garantir la tenue du revêtement et éventuellement son étanchéité au passage de la mousse, ne confère pas le confort attendu, eu égard à son épaisseur relativement faible.

Selon la technique de chaussage d'un corps en mousse par une enveloppe, on a proposé de réaliser des coussins d'appuis-tête en deux parties, une première partie destinée à venir en vis-à-vis de la tête d'un utilisateur en mousse relativement souple, et une deuxième partie située à l'opposé de ladite première partie, en mousse relativement rigide.

On n'a toutefois pas encore envisagé de réaliser un tel appui-tête par un procédé de moulage in situ.

La présente invention vise à fournir un tel procédé.

A cet effet, l'invention a pour objet un procédé de réalisation d'un appui-tête, notamment pour siège de véhicule automobile, ledit appui-tête comprenant une armature de montage, un coussin formé, dans une première partie destinée à venir en vis-à-vis de la tête d'un utilisateur, d'une mousse relativement souple, et dans une deuxième partie située à l'opposé de ladite première partie, d'une mousse relativement rigide, et une enveloppe pour ledit coussin, caractérisé par le fait qu'il comprend les étapes consistant à :
- réaliser ladite première partie ;
- placer dans un moule ladite première partie avec ladite armature et ladite enveloppe ; et
- injecter dans le moule la mousse correspondant à ladite deuxième partie de manière à surmouler la deuxième partie sur la première partie et l'armature à l'intérieur de l'enveloppe.

Dans un mode de mise en oeuvre particulier du procédé, ladite première partie est réalisée par moulage.

Egalement dans un mode de mise en oeuvre particulier, ladite première partie est assemblée sur l'envers de l'enveloppe.

On garantit ainsi le bon positionnement de la première partie du coussin avant le moussage de la deuxième partie.

Plus particulièrement, l'assemblage de ladite première partie à l'enveloppe peut être réalisé par collage, par surmoulage d'une partie de l'enveloppe, ou encore mécaniquement par blocage entre les talons de coutures de l'enveloppe.

Dans ce dernier cas, la pression due à l'expansion de la mousse relativement rigide plaque la première partie du coussin sur l'envers de l'enveloppe et empêche cette mousse de passer entre la première partie et l'enveloppe.

Egalement dans un mode de mise en oeuvre particulier du procédé, ladite première partie est assemblée à un flan intermédiaire apte à former une cloison entre lesdites première et deuxième parties.

Dans un autre mode de réalisation particulier du procédé, la réalisation de la première partie comprend une étape consistant à associer partiellement la première partie à l'armature. Dans un exemple particulier, cette association est réalisée par surmoulage d'une partie de la première partie autour de l'armature.

Une telle association permet de le positionnement précis de la première partie à l'intérieur du moule avant de réaliser le surmoulage de la deuxième partie. On obtient ainsi un appui-tête dont la forme est optimale, ce qui garantit un certain confort à l'utilisateur du véhicule.

On décrira maintenant, à titre d'exemple non limitatif, un mode de réalisation particulier de l'invention, en référence aux dessins schématiques annexés dans lesquels :
- la figure 1 est une vue en coupe de la partie supérieure d'un dossier de siège muni d'un appui-tête réalisé par un procédé selon l'invention ;
- les figures 2 à 5 illustrent différentes étapes de ce procédé ;
- la figure 6 est une vue en coupe de la partie supérieure d'un dossier de siège muni d'un appui-tête réalisé par une variante du procédé selon l'invention.

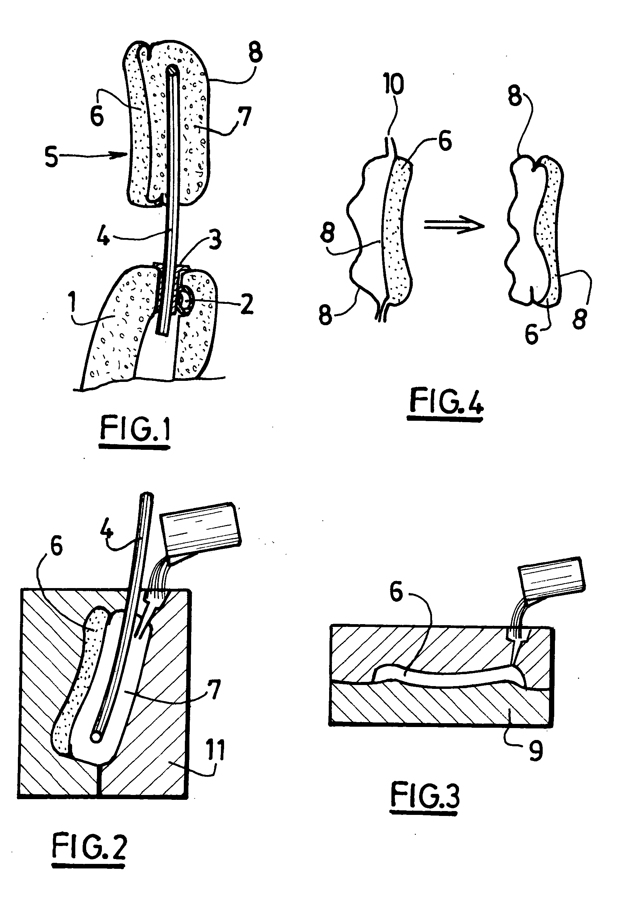

On voit à la figure 1 un dossier de siège 1 dont l'armature 2 supporte des guides 3 pour les broches de montage 4 d'un appui-tête 5. Les broches 4 sont ici les deux branches d'une armature en U.

Comme indiqué plus haut, d'autres formes d'armature sont envisageables.

L'appui-tête 5 comporte un coussin en mousse en deux parties 6 et 7 et une enveloppe 8. La partie 6 du coussin, en vis-à-vis de la tête de l'utilisateur, est réalisée en mousse relativement souple, et la partie 7 à l'opposé de la tête, est réalisée en mousse relativement rigide.

Comme montré à la figure 3, la partie 6 du coussin d'appui-tête est réalisée indépendamment par moulage dans un moule 9 en deux parties d'une mousse relativement souple.

L'enveloppe 8 est réalisée de toute manière convenable. Dans la figure 4, l'enveloppe 8 est cousue et la partie 6 est assemblée sur l'enveloppe, par exemple par collage. L'enveloppe 8 est ensuite retournée grâce à une bouche 10 ménagée dans la couture. Ainsi, la partie 6 se retrouve à l'intérieur de l'enveloppe.

L'armature 2 est alors mise en place dans l'enveloppe et l'ensemble ainsi obtenu est placé dans un moule 11 avec les extrémités des broches de l'armature sortant du moule.

La mousse relativement rigide de la partie 7 est ensuite coulée dans l'enveloppe 8 et, après son expansion, l'appui-tête est extrait du moule 11.

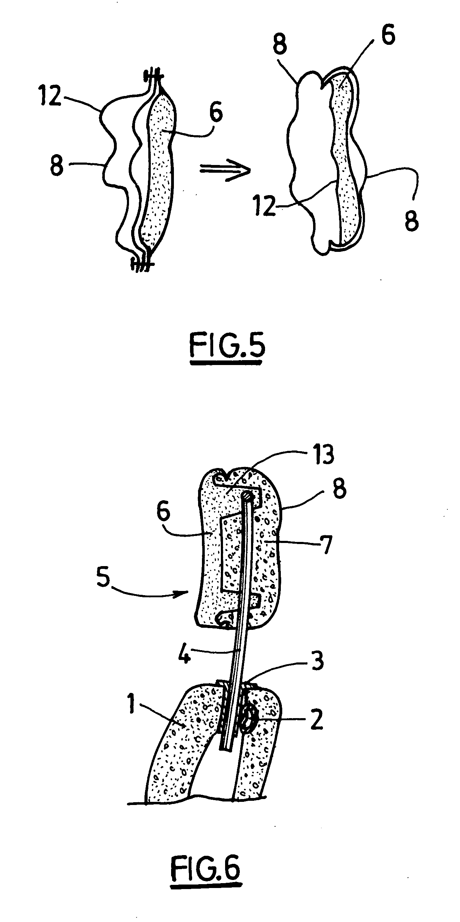

Dans la variante de la figure 5, un flan supplémentaire 12 est cousu avec l'enveloppe 8 de manière à former une cloison entre la partie 6 du coussin et sa partie relativement rigide. Selon une variante représentée sur la figure 6, on peut envisager d'associer partiellement la partie 6 du coussin sur l'armature 2. La partie 6 peut alors comprendre des pattes 13 en mousse, lesdites pattes surmoulant l'armature 2. L'ensemble ainsi formé est placé dans le moule, la partie 6 étant indexée de façon précise dans ledit moule, puis l'ensemble est surmoulé par la partie 7 du coussin.

## Revendications

1. Procédé de réalisation d'un appui-tête, notamment pour siège de véhicule automobile, ledit appui-tête comprenant une armature de montage (4), un coussin formé, dans une première partie (6) destinée à venir en vis-à-vis de la tête d'un utilisateur, d'une mousse relativement souple, et dans une deuxième partie (7) située à l'opposé de ladite première partie, d'une mousse relativement rigide, et une enveloppe (8) pour ledit coussin, **caractérisé par le fait qu'**il comprend les étapes consistant à :
- réaliser ladite première partie ;
- placer dans un moule (11) ladite première partie avec ladite armature et ladite enveloppe ; et
- injecter dans le moule la mousse correspondant à ladite deuxième partie de manière à surmouler la deuxième partie sur la première partie et l'armature à l'intérieur de l'enveloppe.

2. Procédé selon la revendication 1, dans lequel ladite première partie est réalisée par moulage.

3. Procédé selon l'une quelconque des revendications 1 et 2, dans lequel ladite première partie est assemblée sur l'envers de l'enveloppe.

4. Procédé selon la revendication 3, dans lequel l'assemblage de ladite première partie à l'enveloppe est réalisé par collage.

5. Procédé selon la revendication 3, dans lequel l'assemblage de ladite première partie à l'enveloppe est réalisé par surmoulage d'une partie de l'enveloppe.

6. Procédé selon la revendications 3, dans lequel l'assemblage de ladite première partie à l'enveloppe est réalisé mécaniquement par blocage entre les talons de coutures de l'enveloppe.

7. Procédé selon l'une quelconque des revendications 1 à 6, dans lequel ladite première partie est assemblée à un flan intermédiaire (12) apte à former une cloison entre lesdites première et deuxième parties.

8. Procédé selon l'une quelconque des revendications 1 à 7, dans lequel la réalisation de la première partie (6) comprend une étape consistant à associer partiellement ladite première partie sur l'armature (2), par exemple par surmoulage.
